# EUROPEAN PATENT SPECIFICATION

(11) **EP 2 707 917 B1**
(45) Date of publication and mention of the grant of the patent: **05.12.2018**
(21) Application number: 11864999.5
(22) Date of filing: 12.05.2011
(51) Int. Cl.: H01M 4/36, H01M 4/38, H01M 4/133, H01M 4/134, H01M 4/587, C01B 32/192, B82Y 30/00, B82Y 40/00, C04B 35/52, C04B 38/04, H01M 10/052, C04B 111/00

(54) **GRAPHENE MATERIALS HAVING RANDOMLY DISTRIBUTED TWO-DIMENSIONAL STRUCTURAL DEFECTS**
GRAPHENMATERIALIEN MIT WILLKÜRLICH VERTEILTEN ZWEIDIMENSIONALEN STRUKTURDEFEKTEN
MATÉRIAUX À BASE DE GRAPHÈNE COMPORTANT DES DÉFAUTS STRUCTURAUX BIDIMENSIONNELS DISTRIBUÉS DE FAÇON ALÉATOIRE

(43) Date of publication of application: 19.03.2014
(73) Proprietor: Northwestern University, Evanston, IL 60208 (US)
(72) Inventor: KUNG, Harold H., Wilmette, Illinois 60091 (US); ZHAO, Xin, Evanston, Illinois 60201 (US); HAYNER, Cary M., Evanston, Illinois 60201 (US); KUNG, Mayfair C., Wilmette, Illinois 60091 (US)
(74) Representative: Dehns
(86) International application number: PCT/US2011/036206
(87) International publication number: WO 2012/154183

(56) References cited:
- US-A1- 2003 044 608
- JEONG K. LEE ET AL: "Silicon nanoparticles-graphene paper composites for Li ion battery anodes", CHEMICAL COMMUNICATIONS, vol. 46, no. 12, 10 February 2010 (2010-02-10), page 2025, XP055001335, ISSN: 1359-7345, DOI: 10.1039/b919738a
- XIAN DU ET AL: "Graphene nanosheets as electrode material for electric double-layer capacitors", ELECTROCHIMICA ACTA, vol. 55, no. 16, 23 March 2010 (2010-03-23), pages 4812-4819, XP055143961, ISSN: 0013-4686, DOI: 10.1016/j.electacta.2010.03.047
- GUO P ET AL: "Electrochemical performance of graphene nanosheets as anode material for lithium-ion batteries", ELECTROCHEMISTRY COMMUNICATIONS, ELSEVIER, AMSTERDAM, NL, vol. 11, no. 6, 7 May 2009 (2009-05-07), pages 1320-1324, XP026157858, ISSN: 1388-2481, DOI: 10.1016/J.ELECOM.2009.04.036 [retrieved on 2009-05-07]
- V A COLEMAN ET AL: "Defect formation in graphene nanosheets by acid treatment: an x-ray absorption spectroscopy and density functional theory study", JOURNAL OF PHYSICS D: APPLIED PHYSICS, vol. 41, no. 6, 21 February 2008 (2008-02-21), page 062001, XP055128619, ISSN: 0022-3727, DOI: 10.1088/0022-3727/41/6/062001
- HONGFA XIANG ET AL: "Graphene/nanosized silicon composites for lithium battery anodes with improved cycling stability", CARBON, ELSEVIER, OXFORD, GB, vol. 49, no. 5, 4 January 2011 (2011-01-04), pages 1787-1796, XP028138727, ISSN: 0008-6223, DOI: 10.1016/J.CARBON.2011.01.002 [retrieved on 2011-01-09]
- CHOU S L ET AL: "Enhanced reversible lithium storage in a nanosize silicon/graphene composite", ELECTROCHEMISTRY COMMUNICATIONS, ELSEVIER, AMSTERDAM, NL, vol. 12, no. 2, 22 December 2009 (2009-12-22), pages 303-306, XP026858676, ISSN: 1388-2481, DOI: 10.1016/J.ELECOM.2009.12.024 [retrieved on 2010-01-16]
- LEE, J. K. ET AL.: 'Silicon nanoparticles-graphene paper composites for Li ion battery anode' CHEMICAL COMMUNICATIONS vol. 46, no. 12, 10 February 2010, pages 2025 - 2027, XP055001335
- COLEMAN, V. A. ET AL.: 'Defect formation in graphene nanosheets by acid treatment: an x-ray absorption spectroscopy and density functional theory study' JOURNAL OF PHYSICS D: APPLIED PHYSICS vol. 41, no. 6, 21 February 2008, pages 1 - 4, XP055128619

## Description

### BACKGROUND

The proliferation of mobile devices with large numbers of increasingly sophisticated and powerful functions has led to a rapidly increasing demand for high-power, high-capacity electrical energy storage devices. The situation will become even more acute when hybrid and battery-powered electric vehicles become a preferred mode of transportation. Currently, the combined need for high capacity and high power is met by two separate devices: a rechargeable battery for capacity and an ultracapacitor for power. A single device, such as a rechargeable battery that can operate at high power, is highly desirable because it would be lighter, simpler to control, and able to provide sustained high power.

Graphene, a two-dimensional aromatic monolayer graphite has recently been investigated with respect to rate capability and cycling stability when used in conventional electrochemical energy storage devices. The excellent tensile modulus and mechanical durability of self-supporting graphene materials eliminate the requirement for traditional inactive additives and metal foil current collectors. In addition, charge storage materials made by sandwiching high-capacity metallic or redox materials between graphene sheets have shown improved cycling stability.

Unfortunately, the practical charge storage capability of graphene based anodes in Li ion batteries at high charge/discharge rates has been constrained by the structure of graphene, which has a very high aspect ratio (i.e., it is wide, but very thin). In order to access the interior of a graphene stack, Li ions need to enter the structure at the edge of the stack and travel distances of the order of microns. Thus, at high power, when fast Li exchange between the electrolyte solution and the electrode is required, only the regions near the edge of the graphene stack are accessible.

Lee et al., Chemical Communications, vol. 46, no. 12, p2025, discloses silicon nanoparticles-graphene paper composites for Li ion battery anodes.

Xian Du et al., Electrochimica ACTA, vol. 55, no. 23, p4812-4819, discloses graphene nanosheets as electrode material for electric double-layer capacitors.

Guo et al., Electrochemistry Communications, vol. 11, no. 6, p1320-1324, discloses graphene nanosheets as anode materials for lithium-ion batteries.

Coleman et al., Journal of Physics D: Applied Physics, vol. 41, no. 6, p062001, discloses defect formation in graphene nanosheets by acid treatment.

### SUMMARY

Graphene-based materials, electrodes made from the materials, batteries incorporating the electrodes, and methods for making the electrode materials are provided.

One aspect of the invention provides graphene-based materials comprising a plurality of graphene sheets disposed in a vertical stack, wherein graphene sheets within the vertical stack comprise randomly-distributed defect pores formed by in-plane carbon vacancies. The graphene sheets are part of a structure comprising a continuous network of graphitic regions comprising crystalline portions of the vertical stack of graphene sheets. The average density of defect pores in the graphene sheets as measured by the ratio of the average separation distance between adjacent pores to the average pore diameter, is at least 3. In some embodiments, the continuous network of graphitic regions is integrated with a composite comprising: (a) disordered portions of the vertical stack of graphene sheets; and (b) an electrochemically active material, such as silicon nanoparticles, in contact with the graphene sheets in the disordered portions of the vertical stack.

Another aspect of the invention provides lithium ion batteries comprising a cathode, an anode and a non-aqueous electrolyte comprising a lithium salt disposed between the cathode and the anode, wherein the anode comprises a plurality of graphene sheets disposed in a vertical stack, and further wherein graphene sheets within the vertical stack comprise randomly-distributed defect pores formed by in-plane carbon vacancies. The graphene sheets are part of a structure comprising a continuous network of graphitic regions comprising crystalline portions of the vertical stack of graphene sheets. The average density of defect pores in the graphene sheets as measured by the ratio of the average separation distance between adjacent pores to the average pore diameter, is at least 3. In some embodiments of the batteries, the continuous network of graphitic regions is integrated with a composite comprising: (a) disordered portions of the vertical stack of graphene sheets; and (b) an electrochemically active material, such as silicon nanoparticles, in contact with the graphene sheets in the disordered portions of the vertical stack.

Yet another aspect of the invention provides methods for making an electrode material, the method comprising the steps of: exposing a suspension of exfoliated, oxidized graphene sheets to an acid at an acid concentration high enough, and an exposure time long enough, to generate defect pores formed from carbon vacancies in the oxidized graphene sheets; removing the oxidized graphene sheets from the suspension; and reducing the oxidized graphene sheets to form a vertical stack of graphene sheets having a random distribution of defect pores distributed therein. The average density of defect pores in the graphene sheets as measured by the ratio of the average separation distance between adjacent pores to the average pore diameter, is at least 3.

Some embodiments of the methods also include the step of mixing the oxidized graphene sheets in suspension with electrochemically active nanoparticles, such that the nanoparticles are dispersed between the graphene sheets. In these embodiments of the present methods, when the oxidized graphene sheets are removed from the suspension and reduced, the resulting material comprises a network of graphitic regions comprising crystalline portions of the vertical stack of graphene sheets integrated with a composite comprising disordered portions of the vertical stack of graphene sheets and nanoparticles of the electrochemically active material dispersed between the graphene sheets in the disordered portions of the vertical stack, the graphene sheets having a random distribution of defect pores distributed therein.

Other principal features and advantages of the invention will become apparent to those skilled in the art upon review of the following drawings, the detailed description, and the appended claims.

### BRIEF DESCRIPTION OF THE DRAWINGS

Illustrative embodiments of the invention will hereafter be described with reference to the accompanying drawings, wherein like numerals denote like elements.

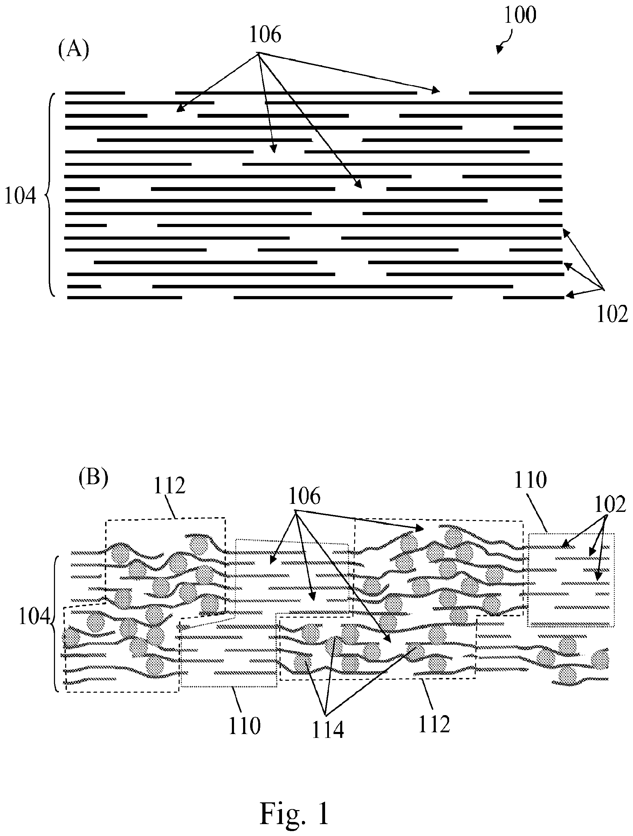

Fig. 1. is a schematic diagram of the cross-section of (A) a vertical stack made of graphene sheets with randomly distributed two-dimensional defect pores and (B) a vertical stack of graphene sheets that includes disordered portions, wherein Si nanoparticles are disposed between graphene sheets, and crystalline portions of ordered graphene sheets. Structural defects in the form of carbon vacancies are distributed through the three-dimensional network. Each broken line represents a single-atom thick graphene sheet with defects (deG). Each group of gray lines represents crystalline portions of the vertical stack. Circles represent Si nanoparticles sandwiched between disordered portions of the graphene sheets, represented by black lines. The disordered portions are structurally connected to the crystalline portions, providing both electrical conductivity and mechanical integrity.

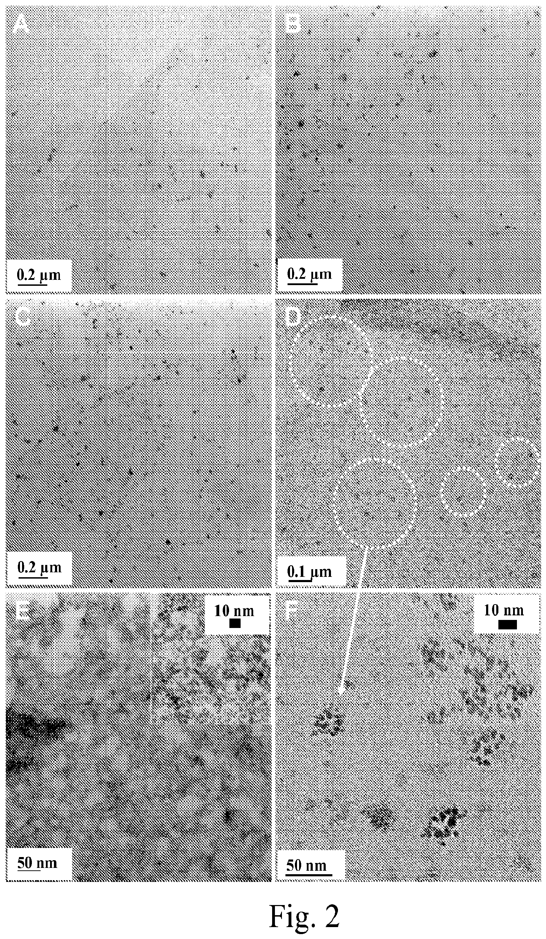

Fig. 2. Transmission electron microscope (TEM) images of Pd-stained samples (see Example): (A) GO, (B) deGO-I, (C) deGO-II, (D) deGO-III, and (E) deGO-IV. (F) A high magnification image of a highlighted region in D, showing ∼3 nm Pd particles in ring-like arrangements, a result of Pd ion binding to carboxylate at defect perimeters.

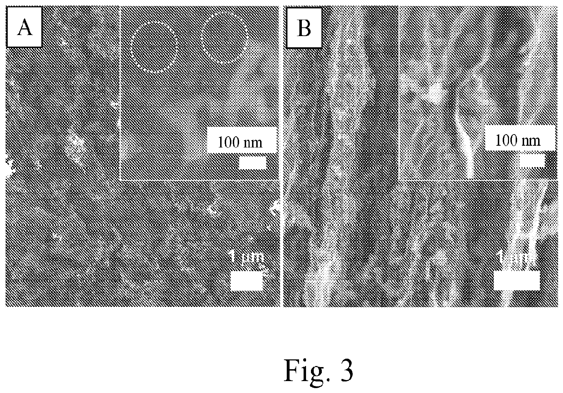

Fig. 3. (A) Scanning electron microscope (SEM) image of the top surface of a Si-deG-III paper (see Example). Circles in the inset highlight in-plane defects. (B) SEM image of the cross-section of a Si-deG-III paper. Insets show Si nanoparticles embedded between graphene sheets uniformly.

### DETAILED DESCRIPTION

One aspect of the invention provides graphene-based materials. The materials can be designed for use as storage materials in high-power battery applications. The storage materials include vertical stacks of graphene sheets and have reduced resistance for Li ion transport relative to other graphene-based electrode materials. This reduced resistance is achieved by incorporating a random distribution of structural defects into the graphene sheets, whereby the structural defects facilitate the diffusion of Li ions into the interior of the storage materials. Electrochemically active materials, such as silicon can be incorporated into the present structures to provide composite materials that take advantage of the enhanced Li ion diffusion and are able to provide electrodes having high power capabilities and storage capacities, without sacrificing mechanical properties and machinability.

Fig. 1(A) shows a schematic diagram of a cross-sectional view of one embodiment of a graphene-based material 100 in accordance with this invention. The material includes a plurality of graphene sheets 102 disposed in a vertical stack 104, wherein graphene sheets within the vertical stack comprise randomly-distributed defect pores 106 formed by in-plane carbon vacancies.

The graphene-based storage material can be made by exposing a suspension of exfoliated and oxidized graphene sheets to an acid for an exposure time sufficient to generate defect pores (carbon vacancies) in the oxidized graphene sheets. This process may be assisted by agitation methods such as sonication. The oxidized graphene sheets are then removed from the suspension and reduced to provide a vertically-stacked arrangement of graphene sheets having a random distribution of defect pores distributed therein. A more detailed description of a method for making the materials is provided in the Example, below. In some embodiments of the present materials, the graphene sheets in the vertical stack are reconstituted into crystalline graphite. In other embodiments, which are described in greater detail below, the graphene sheets in the vertical stack form a hybrid of crystalline graphite regions intermixed with disordered graphene regions.

Because the carbon vacancies are formed independently in individual graphene sheets prior to the formation of the final vertical stack, the resulting defect pores are "randomly distributed" in that they are neither regularly spaced and/or positioned within a given graphene sheet, nor regularly spaced and/or vertically aligned from graphene sheet to graphene sheet within the vertical stack. Thus, the "randomly distributed" pores are easily distinguishable from holes that are patterned (e.g., lithographically patterned) into stacked graphene materials (e.g., graphite), such that the holes in the graphene sheets are aligned to provide straight channels running vertically through the material.

The dimensions and densities of the defect pores in the graphene sheets of the present materials will depend, at least in part, on the concentration of the acid to which they are exposed and on the duration of the exposure. As such, the dimensions and densities of the defect pores can vary considerably from material to material. By way of illustration only, in some embodiments of the materials, the average defect pore diameter is no greater than 100 nm. For example, the average defect pore diameter can be in the range from 1 nm to about 50 nm. Also included are embodiments in which the average defect pore diameter is no greater than about 50 nm and embodiments in which the average defect pore diameter is no greater than 30 nm. The density of the pores, as measured by the ratio of the average separation distance between adjacent pores to the average pore diameter, is at least 3. In some embodiments, the ratio of the average separation distance between adjacent pores to the average pore diameter is at least 10, at least 50, and at least 100. Thus, in some embodiments, the ratio is from 3 to about 100. However, higher ratios are also possible.

If the graphene-based materials are to be used for electrical storage, it can be advantageous to incorporate an electrochemically-active material into the structure. One such structure is illustrated in Fig. 1(B). This structure includes a continuous network of graphitic regions comprising crystalline portions 110 of the vertical stack of graphene sheets 102 (rough outlines of two such portions are shown with dotted lines). This continuous network of graphitic regions is integrated with, and in electrical contact with, a composite comprising: (a) disordered portions 112 of the vertical stack of graphene sheets 102 (rough outlines of two such portions are shown with dashed lines); and (b) an electrochemically active material 114 in contact with the graphene sheets in the disordered portions of the vertical stack. In the embodiment depicted in the figure, the electrochemically active material is in the form of nanoparticles distributed between graphene sheets contained within the disordered portion of the structure. For the purposes of this disclosure, the term 'nanoparticles' refers to a collection of particles having an average particle diameter that is no greater than about 1000 nm and includes collection of particles having an average particle diameter of no greater than about 500 nm, or no greater than about 100 nm. Other forms of electrochemically active material, including rods, cubes, and thin films of electrochemically active material disposed on the disordered portions of the graphene sheets, can also be used.

Methods for making graphene-based materials having crystalline portions and disorder portions with an electrochemically active material dispersed therein can be found in Lee et al, Chem. Commun., 2010, 46, 2025-2027. A detailed description of a method for making such a structure with randomly-distributed defect pores in the graphene sheets is provided in the Example, below. Briefly, a suspension of exfoliated and oxidized graphene sheets is exposed to an acid for an exposure time sufficient to generate defect pores (carbon vacancies) in the oxidized graphene sheets. The oxidized graphene sheets are mixed with an electrochemically active material, such as silicon nanoparticles, to form a composite material comprising the nanoparticles dispersed between graphene sheets. The composite material is removed from the suspension and reduced to form a vertical stack of graphene sheets in which some portions of the graphene sheets form regions of crystalline graphite, while other portions remain disordered and contain the nanoparticles. The result is a material comprising a continuous network of graphitic regions comprising crystalline portions of the vertical stack of graphene sheets, integrated with, and in electrical communication with, a composite comprising disordered portions of the vertical stack of graphene sheets and nanoparticles of electrochemically active material dispersed between the graphene sheets in the disordered portions. The network of graphite is 'continuous' because continuous sheets of graphene extend through both crystalline and disordered portions to form an integral structure. As such, these structures distinguishable from non-continuous structures wherein electrochemically active nanoparticles are located within pores between graphite flakes, graphite worms or graphite platelets. The present structures are well-suited for use as battery electrodes because they offer the combined advantages of the high electrical conductivity and the structural stability of graphite with the flexibility of graphene sheets, as well as the high Li ion storage capacity of the electrochemically active material.

The crystalline portions of the vertical stack of graphene sheets are electrically conducting, mechanically strong, and easy to prepare from exfoliated graphite. They possess limited Li storage capacities, consistent with carbon-based materials. Since they can be made from a low cost starting material and the preparation process is inexpensive and readily scalable, they are well-suited as supports for high-storage capacity materials.

In the disordered portions of the vertical stack of graphene sheets, the flexibility of the graphene sheets makes it much easier for the material to accommodate volume changes of the electrochemically active material during the charging and discharging cycles of a battery. The extremely high surface area of the graphene sheets provides a large number of contact points with the electrochemically active material and, thus, the ability to maintain electrical contact even when the electrochemically active material undergoes morphological changes and/or agglomeration or fracturing during cycling, thus effectively overcoming one of the principal causes of battery performance degradation (capacity fading).

Suitable electrochemically active materials for use in the present structures include, but are not limited to, Si, Sn, or other monometallic, bimetallic, or multimetallic materials, or oxidic or sulfide materials, or their mixtures. If silicon is chosen as the electrochemically active material, typical loadings for the silicon are in the range of about 30 wt.% to about 80 wt.%. For example, in some embodiments the structures comprise about 50 wt.% to about 70 wt.% silicon. This includes embodiments in which the structures comprise about 55 to about 65 wt. % silicon.

Li ion batteries incorporating the present graphene-based materials are also provided. The batteries include a cathode, an anode and a non-aqueous electrolyte comprising a lithium salt disposed between the cathode and the anode. The anode comprises the above-described graphene-based material. Electrodes made from the present materials are typically no greater than 50 µm thick. This includes embodiments of the electrodes that are no greater than 15 µm thick and further includes embodiments of the electrodes that are no greater than 5 µm thick.

Li ion batteries that incorporate the present graphene-based materials as electrodes can deliver both high energy density and high power density. For example, some embodiments of the battery electrode material can deliver a charge capacity of about 1000 mAh/g at a current of 8 A/g for a period of at least 8 minutes, or a charge capacity of about 3200 mAh/g at a current of 1 A/g for at least 3 hours.

### EXAMPLE

This example describes a method for making and characterizing graphene-based materials in accordance with certain embodiments of this invention.

### Materials and Methods:

*Oxidized Graphene ("GO")*: GO was synthesized from flake graphite (Asbury Carbons, 230U Grade, High Carbon Natural Graphite 99⁺) by a modified Hummers method, as described in Kovtyukhova et. al., Chem. Mater. 11, 771 (1999); and Hummers et. al., J. Am. Chem. Soc. 80, 1339 (1958). Graphite powder (2.0 g) was pre-oxidized by stirring it into a concentrated H₂SO₄ (20 mL) solution in which K₂S₂O₈ (1.0 g) and P₂O₅ (1.0 g) were completely dissolved at 80°C. The mixture, in a beaker, was kept at 80°C for 4.5 hours (h) using an oil bath. After the mixture was cooled and diluted with 1 L of DDI (distilled, deionized) water, the pretreated product was filtered with a Nylon membrane filter (47 mm diameter, 0.2 µm pore size, Millipore) and washed on the filter until the pH of filtrate water became neutral. The shiny, dark-gray, pre-oxidized graphite was dried in air overnight. Then it was dispersed by stirring into chilled H₂SO₄ (75 mL) in an Erlenmeyer flask in an ice bath. KMnO₄ (10 g) was added slowly with stirring to keep the temperature of the reaction mixture below 20°C. The resulting thick, dark green paste was allowed to react at 35°C for 2 h followed by addition of DDI water (160 mL) to form a dark brown solution. To avoid overflow of the mixture due to rapid temperature rise with foaming by water addition, the flask was chilled in an ice bath and water was added in ∼5 mL aliquots with close monitoring of the temperature (kept below 50°C). After additional stirring for 2 h, the dark brownish solution was further diluted with distilled water (500 mL), and H₂O₂ (30%, 8.3 mL) was added slowly. The color of the mixture turned bright yellow. The mixture was allowed to settle overnight. The supernatant was decanted and the remaining product was repeatedly centrifuged and washed with DDI water until the pH of the solution became neutral. (At this stage, the Mn concentration in the supernatant was below 0.1 ppm, as measured by atomic absorption spectroscopy (AAS)). Then, the obtained product was diluted to make a ∼0.5 % w/w aqueous dispersion for storage.

*Introduction of in-plane defect pores into GO sheets*: The above aqueous GO suspension was diluted to ∼0.1 % w/w by DDI water and mixed with an appropriate amount of 70% concentrated HNO₃. The mixture was sonicated in a bath sonicator for 1 h. Four different concentrations of HNO₃ were tested, corresponding to a GO suspension/70% HNO₃ volume ratio of 1:5 (I), 1:7.5 (II), 1:10 (III) and 1:12.5 (IV). The mixture was then poured into 100 mL of water, centrifuged at 20000 rpm and washed with water to remove the acid. The resulting GO materials (referred to as a "paper") containing defects (i.e., carbon vacancies) are referred to as deGO, and were obtained by filtering the resulting purified aqueous suspension through an Anodisc membrane filter (47 mm diameter, 0.2 µm pore size, Whatman), followed by air drying and peeling from the filter.

*Reduction of GO papers*: Samples of GO or deGO paper were cut by a razor blade into smaller ribbons so as to fit into a quartz tube for thermal reduction. The GO or deGO papers were reduced with either a flow of Ar (∼90 ml min⁻¹) or 10% hydrogen in Argon (∼100 ml min⁻¹ total flow) at 700°C for 1 h. The resulting reduced, vertically-stacked graphene sheets are referred to as G or deG.

*Si-graphene paper composites*: Si nanoparticles (H-terminated, -50 nm, Meliorum Nanotechnology, stored in Ar) were removed from an argon glove box and exposed to air overnight to ensure the presence of a hydrophilic oxide layer on the surface. Then the Si nanoparticles were dispersed in 1 mL DDI water by sonication to obtain a homogeneous suspension. A desired amount of the aqueous GO or deG dispersion was added to the suspension of Si nanoparticles and the mixture was sonicated for another 2 h, vacuum-filtered, dried, and thermally reduced as described above. The result was a material comprising a continuous network of graphitic regions comprising crystalline portions of the vertical stack of graphene sheets. The continuous network of graphitic regions was integrated with, and in electrical contact with, a composite comprising disordered portions of the vertical stack of graphene sheets and an electrochemically active material in contact with the graphene sheets in the disordered portion of the vertical stack.

### Structural Characterization:

The morphology and thickness of as-prepared (de)GO and (de)G samples were investigated using a Hitachi S-4800-II field emission scanning electron microscope (FE-SEM) and a JOEL 2100F field emission transmission electron microscope (FE-TEM). To perform ion-exchange of (de)GO with Pd²⁺, an appropriate amount of Pd(OAc)₂ was dissolved in DDI water and allowed to settle for hours. After removing the insoluble matter, the supernatant, or further diluted supernatant, of Pd(OAc)₂ was stirred with an aqueous (de)GO dispersion overnight. The ion-exchanged (de)GO was loaded onto a sample holder for the Hitachi HD-2300A FE-STEM operated at 200 kV with energy dispersive spectroscopy (EDS) detectors. X-ray diffraction (XRD) patterns of (de)G and Si-(de)G papers were collected by a Scintag XDS2000 diffractometer with CuK_{α} radiation (λ=1.5418 Å) at 40 kV, a step size of 0.01° and a step time of 0.5 s. X-ray photoelectron spectroscopy (XPS) of (de)GO and (de)G papers was performed using an Omicron ESCA probe equipped with an electron flood gun. The AlK_{α} radiation (1486.6 eV) was used as an excitation source and the binding energy scale was calibrated with respect to adventitious carbon (Cls). Thermogravimetric analysis (TGA, Mettler Toledo, TGA/SDTA851^{e}) was performed on crushed Si-(de)G composite papers in air. The samples were heated to 100°C and held at 100°C for 10 min to remove any volatiles and adsorbed water. Then the temperature was ramped to 800°C at the rate of 10°C/min in flowing air. The weight loss, after correcting for oxidation of Si, was used to calculate the carbon content. Separate TGA with bare Si nanoparticles was run at the same conditions to obtain data to correct the weight gain of Si-(de)G composites due to oxidation of Si nanoparticles in air. Sheet resistance and conductivity measurements were made with a four-point probe technique with an electrode separation of 1 mm using a Keithley 2400 source meter.

### Electrochemical Tests:

Electrochemical measurements were carried out on (de)G papers using two-electrode coin cells with Li metal as the counter electrode. The (de)G working electrodes were typically 0.2-0.3 mg cm⁻² and ∼5 µm thick. Microporous glass-fiber membrane (Whatman) was used as separator, and a Cu foil (99.999%, 0.025 mm thick, Alfa-Aesar) was employed to connect the (de)G papers to external leads. The electrolyte consisted of 1 M LiPF₆ in ethylene carbonate (EC)/dimethyl carbonate (DMC) (1:1, v/v). The cells were assembled in an argon-filled glove box, and galvanostatic measurements were conducted with a BT2000 Potentiostat/Galvanostat system (Arbin Instruments) at various current densities, typically in the voltage range of 0.02-1.5 V vs. Li/Li⁻. Electrochemical measurements of Si-(de)G composite papers were carried out using three-electrode Swagelok-type cells, with a Li metal reference electrode that was separated from a Li metal counter electrode. The thin Si-(de)G composite electrodes were ∼1 mg/cm² and 5 µm thick, and the thick Si-(de)G composite electrodes were ∼4 mg/cm² and 20 µm thick. They were placed on stainless steel plungers with or without Cu foils in between in the Swagelok-type cells. Electrochemical cycling of Si-(de)G composite electrodes was performed using two different procedures, either at various current densities in the voltage range of 0.02-2 V vs. Li/Li⁺ or a constant current-constant voltage (CCCV) method. In the CCCV method, during lithiation, the current was held at 1000 mA/g until the potential drop to 20 mV. After reaching 20 mV, the potential was held constant until the current was decreased from 1000 mA/g to 50 mA/g. During delithiation, the current was held at 1000 mA/g while the potential was increased to 1.5 V, at which point the potential was held at 1.5 V until the current decreased to 50 mA/g. Additionally, fast rate tests were also performed on Si-deG-II composite electrodes using cutoff voltages of 0.02-1.5 V at currents from 1000 mA/g to 8000 mA/g. Electrochemical impedance spectroscopy (EIS) measurements were conducted on two-electrode Swagelok-type cells with a Li metal counter electrode and 120 µL of the above electrolyte. Data were collected using a Solartron 1260 impedance analyzer coupled with a Solartron 1286 electrochemical interface by applying an AC voltage of 10 mV amplitude and DC open circuit voltage (OCV) in the frequency range of 1 MHz-0.01 Hz at room temperature.

### Results:

*Structural Characterization:* The acid-sonication treatment created carbon vacancies with carboxylate groups decorating the defect edge sites. The carboxylates, via electrostatic interaction with heavy metals such as Pd ions, were utilized to examine the dependence of defect generation on the severity of the acid-oxidation treatment. Pd nanoparticles, formed by reduction of Pd ions with electron beam, are easily observable with electron microscopy. Fig. 2A-E show the bright field TEM images of GO and deGOs. The density of Pd particles on deGO increased with increasing severity of acid treatment. For samples III and IV, clusters of Pd nanoparticles were readily detected. A high-magnification image of deGO-III (Fig. 2F) shows that the Pd clusters gathered in rings, consistent with them located at the perimeter of the pore-like defects. Many of the observable pores were 10-20 nm in diameter. The most severely treated deGO-IV displayed a higher density of larger pores (Fig. 2E). These observations are in agreement with X-ray photoelectron spectroscopic (XPS) measurements which showed that the acid-oxidation treatment increased the peak area of oxygen functional groups relative to aromatic carbon. Large micron-size defects could also be detected by SEM on the more severely treated samples.

In contrast to the deGO, deG had little capacity to bind Pd ions, making observation of defects, other than large pores, by electron microscopy more challenging. The largest pores observed were roughly <10 nm, 20 nm, 100 nm, and> 100 nm for samples I, II, III, and IV, respectively.

Both Si-deGO and Si-deG papers containing 65-70 wt% Si were flexible and X-ray diffraction confirmed the presence of both crystalline graphite domains and disordered regions. SEM images revealed homogeneously dispersed Si nanoparticles sandwiched between graphene sheets (Fig. 3A and B).

*Electrochemical Properties:* A ∼5 µm thick Ar-reduced Si-deG-II paper cycled between 0.02 - 1.5 V (vs. Li/Li⁺) at 1 A/g exhibited a reversible capacity close to its theoretical value of ∼3200 mAh/g after 5 cycles. Thereafter, the capacity loss was only 0.14% per cycle, such that 83% of its theoretical capacity was maintained after 150 cycles. The initial irreversible capacity losses were mostly due to the formation of solid electrolyte interphase (SEI) and reactions of Li with residual O and H-containing groups in graphene. When tested at 8 A/g, a reversible capacity of ∼1100 mAh/g was obtained, which degraded at ∼0.34% per cycle for 150 cycles. This specific current corresponded to a rate of ∼8C based on the accessible storage capacity, or ∼2.6C based on the theoretical capacity; hence referred to as theoretical C-rate. The characteristic voltage plateaus for phase transformation of amorphous Si at 0.3-0.17 V and 0.1-0.05 V (lithiation), and 0.2-0.4 V and 0.45-0.58 V (delithiation) remained distinguishable even at such high rates. Capacity fade could be reduced by cycling through a narrower range of 0.1-0.55V to minimize the destructive effect of volume variation and possible dissolution and re-formation of SEI at high voltages. At 4 A/g (∼1.3C theoretical), capacity fade was ∼0.1% per cycle, and a reversible capacity of ∼600 mAh/g was maintained after 150 cycles. Stable storage capacity and reversibility were observed when the rate was first stepwise increased from 0.1 to 8 mA/g and then decreased.

The ability to maintain high capacity at high rates for the Si-deG samples was due to enhanced Li ion diffusion. This was confirmed by electrochemical impedance spectroscopy. Nyquist plots of Si-deG showed a pronounced reduction in both the charge-transfer resistance and the Warburg coefficient compared with Si-G, whereas the constant phase element increased gradually, implying a more capacitive interface.

The ultrahigh charge storage capacity at high charge/discharge rates of the Si-deG composites indicate that they can function as stable anodes for high-power battery applications. If a Si-deG anode can be coupled with a cathode that has a comparable capacity to form a 3 V battery, and assuming the total active storage materials in this battery account for 20% of the total weight, the battery could deliver 2.4 kW/kg power and 330 Wh/kg energy for 8 min. Alternatively, it could deliver 300 W/kg power and 900 Wh/kg energy for 180 min. These values are equivalent to a 400 kg (880 lb) engine providing 0.96 MW power (∼1290 hp) for 8 min, or 120 kW (∼160 hp) for 180 min. This unprecedented combination of energy and power capability can meet the requirements for the electrification of a wide range of transportation systems.

Defect size and density of the Si-deG composites influence capacity and rate capabilities, while treatment in Ar or H₂ had minor effects. Si-deG-II was the most tolerant to high rates, maintaining 34% of theoretical capacity at 8 A/g. Improved rate capability due to improved ion diffusivity was observed also with graphite papers formed by reconstituting graphene sheets with induced defects. The best sample tested exhibited 180 mAh/g capacity at a current of 2 A/g with excellent cycling stability.

The word "illustrative" is used herein to mean serving as an example, instance, or illustration. Any aspect or design described herein as "illustrative" is not necessarily to be construed as preferred or advantageous over other aspects or designs. Further, for the purposes of this disclosure and unless otherwise specified, "a" or "an" means "one or more". Still further, the use of "and" or "or" is intended to include "and/or" unless specifically indicated otherwise.

The foregoing description of illustrative embodiments of the invention has been presented for purposes of illustration and of description. It is not intended to be exhaustive or to limit the invention to the precise form disclosed, and modifications and variations are possible in light of the above teachings or may be acquired from practice of the invention. The embodiments were chosen and described in order to explain the principles of the invention and as practical applications of the invention to enable one skilled in the art to utilize the invention in various embodiments and with various modifications as suited to the particular use contemplated. It is intended that the scope of the invention be defined by the claims appended hereto.

## Claims

1. A graphene-based material (100) comprising a plurality of graphene sheets (102) disposed in a vertical stack (104), wherein the graphene sheets within the vertical stack comprise randomly-distributed defect pores (106) formed by in-plane carbon vacancies; and
the graphene sheets are part of a structure comprising a continuous network of graphitic regions comprising crystalline portions (110) of the vertical stack of graphene sheets (104);
**characterised in that** the average density of defect pores (106) in the graphene sheets as measured by the ratio of the average separation distance between adjacent pores to the average pore diameter, is at least 3.

2. The material of claim 1, wherein the average diameter of the defect pores (106) is in the range from 1 nm to 100 nm, preferably wherein the average diameter of the defect pores (106) is no greater than 30 nm.

3. The material of claim 1, wherein the average density of defect pores (106) in the graphene sheets as measured by the ratio of the average separation distance between adjacent pores to the average pore diameter, is at least 100.

4. The material of any of claims 1-3, wherein the continuous network of graphitic regions is integrated with a composite comprising: (a) disordered portions (112) of the vertical stack of graphene sheets (104); and (b) an electrochemically active material (114) in contact with the graphene sheets in the disordered portions of the vertical stack.

5. The material of claim 4, wherein the electrochemically active material (114) is silicon, preferably wherein the silicon is in the form of silicon nanoparticles dispersed between the graphene sheets in the disordered portions (112) of the vertical stack (104).

6. A lithium ion battery comprising a cathode, an anode and a non-aqueous electrolyte comprising a lithium salt disposed between the cathode and the anode;
wherein the anode comprises a plurality of graphene sheets (102) disposed in a vertical stack (104);
wherein graphene sheets within the vertical stack (104) comprise randomly-distributed defect pores (106) formed by in-plane carbon vacancies; and
wherein the graphene sheets are part of a structure comprising a continuous network of graphitic regions comprising crystalline portions (110) of the vertical stack of graphene sheets (104);
wherein the average density of defect pores (106) in the graphene sheets as measured by the ratio of the average separation distance between adjacent pores to the average pore diameter, is at least 3.

7. The lithium ion battery of claim 6, wherein the average diameter of the defect pores (106) is in the range from about 1 nm to about 100 nm.

8. The lithium ion battery of any of claims 6-7, wherein the continuous network of graphitic regions is integrated with a composite comprising: (a) disordered portions (112) of the vertical stack of graphene sheets (104); and (b) an electrochemically active material (114) in contact with the graphene sheets in the disordered portions of the vertical stack.

9. The lithium ion battery of claim 8, wherein the electrochemically active material (114) comprises nanoparticles dispersed between the graphene sheets in the disordered portions of the vertical stack.

10. The lithium ion battery of claim 9, wherein the nanoparticles are silicon nanoparticles.

11. A method for making an electrode material, the method comprising:
(a) exposing a suspension of exfoliated, oxidized graphene sheets to an acid at an acid concentration high enough, and an exposure time long enough, to generate defect pores formed from carbon vacancies in the oxidized graphene sheets;
(b) removing the oxidized graphene sheets from the suspension;
(c) reducing the oxidized graphene sheets to form a vertical stack of graphene sheets having a random distribution of defect pores distributed therein;
wherein the average density of defect pores (106) in the graphene sheets as measured by the ratio of the average separation distance between adjacent pores to the average pore diameter, is at least 3.

12. The method of claim 11, wherein the average diameter of the defect pores (106) is in the range from 1 nm to 100 nm.

13. The method of claim 11, further comprising mixing the oxidized graphene sheets in suspension with electrochemically active nanoparticles, such that the nanoparticles are dispersed between the graphene sheets, whereby when the oxidized graphene sheets are removed from the suspension and reduced, the resulting material comprises a network of graphitic regions comprising crystalline portions (110) of the vertical stack of graphene sheets (104) integrated with a composite comprising disordered portions (112) of the vertical stack of graphene sheets (104) and nanoparticles of the electrochemically active material (114) dispersed between the graphene sheets in the disordered portions of the vertical stack, the graphene sheets having a random distribution of defect pores (106) distributed therein.

14. The method of claim 13, wherein the nanoparticles are silicon nanoparticles.

## Patentansprüche

1. Graphen-basiertes Material (100), umfassend eine Vielzahl von in einem vertikalen Stapel (104) angeordneten Graphenschichten (102), wobei die Graphenschichten innerhalb des vertikalen Stapels willkürlich verteilte Defektporen (106) umfassen, die durch Kohlenstoffleerstellen in der Ebene gebildet sind; und
die Graphenschichten Teil einer Struktur sind, die ein kontinuierliches Netzwerk von Graphit-Bereichen umfasst, die kristalline Abschnitte (110) des vertikalen Stapels von Graphenschichten (104) umfassen;
**dadurch gekennzeichnet, dass**
die durchschnittliche Dichte der Defektporen (106) in den Graphenschichten, gemessen durch das Verhältnis des durchschnittlichen Trennungsabstandes zwischen benachbarten Poren zu dem durchschnittlichen Porendurchmesser, mindestens 3 beträgt.

2. Material nach Anspruch 1, wobei der mittlere Durchmesser der Defektporen (106) in dem Bereich von 1 nm bis 100 nm liegt, vorzugsweise wobei der mittlere Durchmesser der Defektporen (106) nicht größer als 30 nm ist.

3. Material nach Anspruch 1, wobei die durchschnittliche Dichte der Defektporen (106) in den Graphenschichten, gemessen durch das Verhältnis des durchschnittlichen Trennungsabstandes zwischen benachbarten Poren zu dem durchschnittlichen Porendurchmesser, mindestens 100 beträgt.

4. Material nach einem der Ansprüche 1-3, wobei das kontinuierliche Netzwerk von Graphit-Bereichen in einen Verbund integriert ist, umfassend: (a) ungeordnete Abschnitte (112) des vertikalen Stapels von Graphenschichten (104); und (b) ein elektrochemisch aktives Material (114) in Kontakt mit den Graphenschichten in den ungeordneten Abschnitten des vertikalen Stapels.

5. Material nach Anspruch 4, wobei das elektrochemisch aktive Material (114) Silizium ist, vorzugsweise wobei das Silizium in der Form von Silizium-Nanoteilchen vorliegt, die zwischen den Graphenschichten in den ungeordneten Abschnitten (112) des vertikalen Stapels (104) verstreut sind.

6. Lithiumionenbatterie, umfassend eine Kathode, eine Anode und einen nichtwässrigen Elektrolyten, der ein Lithiumsalz umfasst, das zwischen der Kathode und der Anode angeordnet ist;
wobei die Anode eine Vielzahl von Graphenschichten (102) umfasst, die in einem vertikalen Stapel (104) angeordnet sind;
wobei Graphenschichten innerhalb des vertikalen Stapels (104) willkürlich verteilte Defektporen (106) umfassen, die durch Kohlenstoffleerstellen in der Ebene gebildet sind; und
wobei die Graphenschichten Teil einer Struktur sind, die ein kontinuierliches Netzwerk von Graphit-Bereichen umfasst, die kristalline Abschnitte (110) des vertikalen Stapels von Graphenschichten (104) umfassen;
wobei die durchschnittliche Dichte der Defektporen (106) in den Graphenschichten, gemessen durch das Verhältnis des durchschnittlichen Trennungsabstandes zwischen benachbarten Poren zu dem durchschnittlichen Porendurchmesser, mindestens 3 beträgt.

7. Lithiumionenbatterie nach Anspruch 6, wobei der mittlere Durchmesser der Defektporen (106) in dem Bereich von etwa 1 nm bis etwa 100 nm liegt.

8. Lithiumionenbatterie nach einem der Ansprüche 6- 7, wobei das kontinuierliche Netzwerk von Graphit-Bereichen in einen Verbund integriert ist, umfassend: (a) ungeordnete Abschnitte (112) des vertikalen Stapels von Graphenschichten (104); und (b) ein elektrochemisch aktives Material (114) in Kontakt mit den Graphenschichten in den ungeordneten Abschnitten des vertikalen Stapels.

9. Lithiumionenbatterie nach Anspruch 8, wobei das elektrochemisch aktive Material (114) Nanoteilchen umfasst, die zwischen den Graphenschichten in den ungeordneten Abschnitten des vertikalen Stapels verstreut sind.

10. Lithiumionenbatterie nach Anspruch 9, wobei die Nanoteilchen Silizium-Nanoteilchen sind.

11. Verfahren zur Herstellung eines Elektrodenmaterials, wobei das Verfahren umfasst:
(a) Einwirkenlassen einer Suspension von abgeblätterten, oxidierten Graphenschichten auf eine Säure bei einer ausreichend hohen Säurekonzentration und einer ausreichenden Belichtungszeit, um Defektporen zu erzeugen, die aus Kohlenstoffleerstellen in den oxidierten Graphenschichten erzeugt werden;
(b) Entfernen der oxidierten Graphenschichten von der Suspension;
(c) Reduzieren der oxidierten Graphenschichten, um einen vertikalen Stapel von Graphenschichten, die eine willkürlichen Verteilung von darin verteilten Defektporen aufweisen, zu bilden;
wobei die durchschnittliche Dichte der Defektporen (106) in den Graphenschichten, gemessen durch das Verhältnis des durchschnittlichen Trennungsabstandes zwischen benachbarten Poren zu dem durchschnittlichen Porendurchmesser, mindestens 3 beträgt.

12. Verfahren nach Anspruch 11, wobei der mittlere Durchmesser der Defektporen (106) in dem Bereich von 1 nm bis 100 nm liegt.

13. Verfahren nach Anspruch 11, weiter Mischen der oxidierten Graphenschichten in Suspension mit elektrochemisch aktiven Nanoteilchen umfassend, sodass die Nanoteilchen zwischen den Graphenschichten verstreut sind, wodurch, wenn die oxidierten Graphenschichten aus der Suspension entfernt und reduziert werden, das resultierende Material ein Netzwerk von Graphit-Bereichen umfasst, die kristalline Abschnitte (110) des vertikalen Stapels von Graphenschichten (104) integriert mit einem Verbund, der ungeordnete Abschnitte (112) der vertikalen Stapel von Graphenschichten (104) und Nanoteilchen des elektrochemisch aktiven Materials (114) umfasst, die zwischen den Graphenschichten in den ungeordneten Abschnitten des vertikalen Stapels verstreut sind, umfassen, wobei die Graphenschichten eine willkürliche Verteilung von darin verteilten Defektporen (106) aufweisen.

14. Verfahren nach Anspruch 13, wobei die Nanoteilchen Silizium-Nanoteilchen sind.

## Revendications

1. Matière à base de graphène (100) comprenant une pluralité de feuilles de graphène (102) disposées dans un empilement vertical (104), dans laquelle les feuilles de graphène dans l'empilement vertical comprennent des pores défectueux aléatoirement distribués (106) formés par des lacunes de carbone dans le plan ; et
les feuilles de graphène font partie d'une structure comprenant un réseau continu de régions graphitiques comprenant des portions cristallines (110) de l'empilement vertical de feuilles de graphène (104) ;
**caractérisé en ce que**
la densité moyenne de pores défectueux (106) dans les feuilles de graphène, telle que mesurée par le rapport de la distance de séparation moyenne entre des pores adjacents sur le diamètre de pore moyen, est d'au moins 3.

2. Matière selon la revendication 1, dans lequel le diamètre moyen des pores défectueux (106) est dans la plage allant de 1 nm à 100 nm, de préférence dans laquelle le diamètre moyen des pores défectueux (106) n'est pas supérieur à 30 nm.

3. Matière selon la revendication 1, dans laquelle la densité moyenne de pores défectueux (106) dans les feuilles de graphène, telle que mesurée par le rapport de la distance de séparation moyenne entre des pores adjacents sur le diamètre de pore moyen, est d'au moins 100.

4. Matière selon l'une quelconque des revendications 1 à 3, dans laquelle le réseau continu de régions graphitiques est intégré avec un composite comprenant : (a) des portions désordonnées (112) de l'empilement vertical de feuilles de graphène (104) ; et (b) une matière active d'un point de vue électrochimique (114) en contact avec les feuilles de graphène dans les portions désordonnées de l'empilement vertical.

5. Matière selon la revendication 4, dans lequel la matière active d'un point de vue électrochimique (114) est du silicium, de préférence dans laquelle le silicium est sous la forme de nanoparticules de silicium dispersées entre les feuilles de graphène dans les portions désordonnées (112) de l'empilement vertical (104).

6. Batterie au lithium-ion comprenant une cathode, une anode et un électrolyte non aqueux comprenant un sel de lithium disposé entre la cathode et l'anode ;
dans laquelle l'anode comprend une pluralité de feuilles de graphène (102) disposées dans un empilement vertical (104) ;
dans laquelle des feuilles de graphène à l'intérieur de l'empilement vertical (104) comprennent des pores défectueux aléatoirement distribués (106) formés par des lacunes de carbone dans le plan ; et
dans laquelle les feuilles de graphène font partie d'une structure comprenant un réseau continu de régions graphitiques comprenant des portions cristallines (110) de l'empilement vertical de feuilles de graphène (104) ;
dans laquelle la densité moyenne de pores défectueux (106) dans les feuilles de graphène, telle que mesurée par le rapport de la distance de séparation moyenne entre des pores adjacents sur le diamètre de pore moyen, est d'au moins 3.

7. Batterie au lithium-ion selon la revendication 6, dans laquelle le diamètre moyen des pores défectueux (106) est dans la plage d'environ 1 nm à environ 100 nm.

8. Batterie au lithium-ion selon l'une quelconque des revendications 6 à 7, dans laquelle le réseau continu de régions graphitiques est intégré avec un composite comprenant : (a) des portions désordonnées (112) de l'empilement vertical de feuilles de graphène (104) ; et (b) une matière active d'un point de vue électrochimique (114) en contact avec les feuilles de graphène dans les portions désordonnées de l'empilement vertical.

9. Batterie au lithium-ion selon la revendication 8, dans laquelle la matière active d'un point de vue électrochimique (114) comprend des nanoparticules dispersées entre les feuilles de graphène dans les portions désordonnées de l'empilement vertical.

10. Batterie au lithium-ion selon la revendication 9, dans laquelle les nanoparticules sont des nanoparticules de silicium.

11. Procédé pour fabriquer une matière d'électrode, le procédé comprenant :
(a) l'exposition d'une suspension de feuilles de graphène exfoliées et oxydées à un acide à une concentration d'acide assez élevée et un temps d'exposition assez long, pour produire des pores défectueux formés de lacunes de carbone dans les feuilles de graphène oxydées ;
(b) l'enlèvement des feuilles de graphène oxydées depuis la suspension ;
(c) la réduction des feuilles de graphène oxydées pour former un empilement vertical de feuilles de graphène ayant une distribution aléatoire de pores défectueux distribués en son sein ;
dans laquelle la densité moyenne de pores défectueux (106) dans les feuilles de graphène, telle que mesurée par le rapport de la distance de séparation moyenne entre des pores adjacents sur le diamètre de pore moyen, est d'au moins 3.

12. Procédé selon la revendication 11, dans lequel le diamètre moyen des pores défectueux (106) est dans la plage allant de 1 nm à 100 nm.

13. Procédé selon la revendication 11, comprenant en outre le mélange des feuilles de graphène oxydées en suspension avec des nanoparticules actives d'un point de vue électrochimique, de sorte que les nanoparticules sont dispersées entre les feuilles de graphène, par lequel lorsque les feuilles de graphène oxydées sont enlevées de la suspension et réduites, la matière résultante comprend un réseau de régions graphitiques comprenant des portions cristallines (110) de l'empilement vertical de feuilles de graphène (104) intégré avec un composite comprenant des portions désordonnées (112) de l'empilement vertical de feuilles de graphène (104) et des nanoparticules de la matière active d'un point de vue électrochimique (114) dispersées entre les feuilles de graphène dans les portions désordonnées de l'empilement vertical, les feuilles de graphène ayant une distribution aléatoire de pores défectueux (106) distribués en son sein.

14. Procédé selon la revendication 13, dans lequel les nanoparticules sont des nanoparticules de silicium.
